# EUROPÄISCHE PATENTSCHRIFT

(11) **EP 1 669 717 B1**
(45) Veröffentlichungstag und Bekanntmachung des Hinweises auf die Patenterteilung: **26.10.2011**
(21) Anmeldenummer: 05110824.9
(22) Anmeldetag: 16.11.2005
(51) Int. Cl.: G01C 15/00

(54) **Aktiver Detektor zur Bestimmung der Position eines Laserstrahls**
Active detector for determining the position of a laser beam
Détecteur actif de position d'un faisceau laser

(30) Priorität: 10.12.2004 DE 102004059639
(43) Veröffentlichungstag der Anmeldung: 14.06.2006
(73) Patentinhaber: HILTI Aktiengesellschaft, 9494 Schaan (LI)
(72) Erfinder: Waibel, Reinhard, 9442, Berneck (CH)
(74) Vertreter: Wildi, Roland

(56) Entgegenhaltungen:
- EP-A- 0 426 287
- US-A- 3 894 230

## Beschreibung

Die Erfindung bezeichnet einen aktiven Strahlfänger, insbesondere für einen aufgefächerten Laserstrahl eines Linienlasersenders.

Bei Positionierungstätigkeiten im Baugewerbe werden Positioniergeräte genutzt, die Laserstrahlen zur Markierung aussenden. Insbesondere bei grösseren Entfernungen, schwach reflektierenden Untergründen und hohen Anforderungen an die absolute Positioniergenauigkeit dienen den Positioniergeräten zugeordnete Strahlfänger zum sicheren Finden des Strahls, zur exakten Markierung bzw. definierten Bestimmung einer Positionsabweichung. Bei Linienlasersendern wird mit einem in einem Winkelsektor aufgefächerten Laserstrahl statt eines punktuellen Leuchtflecks eine Linie an die Wand projiziert. Dabei addieren sich im ungünstigsten Fall der Neigungsfehler in Projektionsrichtung, die Neigungsablage senkrecht zur Projektionsrichtung und der Geradheitsfehler des aufgefächerten Laserstrahls zu einem Gesamtfehler der Positionsgenauigkeit auf, welcher zudem linear mit zunehmender Entfernung vom Positioniergerät anwächst. Dies ist insbesondere von Bedeutung, weil Positionierungen mit modernen Positioniergeräten und Strahlfängern selbst bei ungünstiger, bspw. heller Umgebung über grosse Distanzen von mehr als 100m zuverlässig sind. In günstiger, bspw. dunkler Umgebung wäre die Detektion des Laserstrahls jedoch noch über ein Vielfaches der Distanz möglich, wobei jedoch der Gesamtfehler zu gross würde. Die Unterbindung von derartigen Positionierungen mit zu grossem Gesamtfehler ist für den Nutzer von hoher praktischer Bedeutung.

Bei üblichen passiven Strahlfängern dienen optische Hilfsmittel wie Keile, oder Fresnellinsen zur Umsetzung minimaler Lageunterschiede des auftreffenden Laserlichtstrahls in qualitativ unterschiedliche Anzeigen. Bei üblichen aktiven Strahlfängern dient ein, von einer Stromquelle gespeisster, Photodetektor zum Empfang des Laserlichtstrahls und eine, mit einer Auswerteeinheit verbundene, Anzeige zur Bestimmung der Versetzung des Lichtstrahls zum Referenzpunkt.

Nach der US3894230 weist ein aktiver Strahlfänger für einen pulsierenden Lichtstrahl einen Photodetektor mit mehreren, längs einer Linie zu einem Referenzpunkt definiert versetzten Photodioden in Form eines impulsgesteuerten Photodiodenarrays, eine Auswerteeinheit und eine numerische Ausgabe der Versetzung des Lichtstrahls zum Referenzpunkt auf.

Nach der EP0426287 weist ein aktiver Strahlfänger für einen Lichtstrahl paarweise Photodetektoren auf, wodurch die ermittelte und angezeigte Mittenlage des Lichtstrahls unabhängig von dessen Leuchtfleckgrösse und der Energieverteilung im Strahlquerschnitt bestimmbar ist. Eine Entscheidung bezüglich eines möglichen Gesamtfehlers erfolgt nicht.

Die Aufgabe der Erfindung besteht in der Realisierung eines aktiven Strahlfängers, mit dem in zweckentsprechender Nutzung mit einem zugeordneten Linienlasersender mögliche Positionierungen mit zu grossem Gesamtfehler vermieden werden.

Die Aufgabe wird im Wesentlichen durch die Merkmale des Anspruchs 1 gelöst. Vorteilhafte Weiterbildungen ergeben sich aus den abhängigen Ansprüchen.

So weist ein aktiver Strahlfänger für einen Lichtstrahl einen Photodetektor mit mehreren, längs einer Linie zu einem Referenzpunkt definiert versetzten Photodioden in Form eines Photodiodenarrays, eine Auswerteeinheit und eine Versetzungsanzeige zur Anzeige der Versetzung des Lichtstrahls zum Referenzpunkt auf, wobei der Auswerteeinheit einen Parametersatz zumindest eines zuordenbaren Linienlasersenders, ein Massbestimmungsmodul zur Bestimmung eines der detektierten Lichtenergie des Lichtstrahls zugeordneten Energiemasses und ein Fehlerschätzmodul zur Abschätzung eines vom Energiemass abhängigen Fehlerschätzwertes aufweist.

Durch das von der detektierten Lichtenergie abhängige Fehlerschätzmodul wird ein Fehlerschätzwert bereitgestellt, durch welchen der Nutzer zur Vermeidung von Positionierungen mit zu grossem Gesamtfehler angehalten wird.

Zum näheren Verständnis dient nachfolgende Abschätzung. Die Intensitätsverteilung im elliptischen Strahlquerschnitt einer Laserdiode ist längs jeder der Halbachsen üblicherweise aus physikalischen Gründen heraus GAUSSförmig. Somit ist auch ein üblicherweise längs der grossen Halbachse in einem Linienlasersender über einen Strahlsplitter linear fächerförmig aufgesplitteter Laserstrahl bezüglich der Linienenergiedichte entsprechend verteilt, welche zu den aufgesplitteten Linienenden hin abnimmt. Zudem nimmt die Linienenergiedichte im vom fächerförmig aufgesplitteten Laserstrahl überstrichenen Sektor linear mit der Entfernung ab. Somit unterschreitet diese einen gegebenen Schwellwert sowohl im Sektorzentrum bei grosser Entfernung als auch bei kleiner Entfernung am Sektorrand. Diese Abhängigkeit korreliert invers hinreichend gut mit dem Gesamtfehler, der als wesentliche Komponenten den zur Entfernung proportionalen Neigungsfehler in Projektionsrichtung und die zur Winkelablage vom Sektorzentrum proportionale Neigungsablage senkrecht zur Projektionsrichtung beinhaltet. Die inverse detektierte Linienenergiedichte ist somit dem möglichen Gesamtfehler beim Positionieren annähernd proportional und stellt somit ein geeignetes Kriterium dar, welches zur Unterbindung derartiger Nutzungen mit möglicherweise zu grossem Gesamtfehler auswertbar ist. Mit Verwendung der entsprechenden linienlasersenderspezifischen Parameter kann über die vom Photodiodenarray detektierte Lichtenergie die Linienenergiedichte und weiter ein absoluter Fehlerschätzwert bestimmt werden.

Vorteilhaft wird bei der Bestimmung der Linienenergiedichte die detektierte Lichtenergie um die Grundrauschenergie vermindert, wodurch insbesondere bei gepulsten Linienlasern eine höhere Störsicherheit erzielt wird.

Vorteilhaft ist der Parametersatz in einem programmierbaren Speicherbereich abgelegt, wodurch dessen Programmierung im Einzelfall möglich ist, bspw. bei der Endjustage.

Vorteilhaft ist die Auswerteeinheit mit einer Fehleranzeige zur numerischen Anzeige des Fehlerschätzwertes verbunden, wodurch dem Nutzer der Vertrauensbereich der Positionierung mitgeteilt wird.

Vorteilhaft wird von der Auswerteeinheit der Fehlerschätzwert mit einem Grenzfehlerwert verglichen, wodurch ein logisches Fehlersignal bereitgestellt ist.

Vorteilhaft ist der Auswerteeinheit ein Signalmittel zur Signalisierung eines Fehlersignals zugeordnet, wodurch eine unzulässige Positionierung dem Nutzer mitgeteilt wird.

Vorteilhaft ist ein Steuermodul zur aktiven Unterbindung der zweckentsprechenden Nutzung abhängig vom Fehlersignals zugeordnet, wodurch unter Verwendung der dem verwendeten Linienlasersender entsprechend zugeordneten Parameter ein Positionieren mit möglicherweise zu grossem Gesamtfehler ausgeschlossen wird.

Vorteilhaft wird zur Unterbindung der zweckentsprechenden Nutzung die Anzeige zweckentfremdend modifiziert, bspw. durch Aktivierung sämtlicher Anzeigemittel oder wechselnde Anzeigemuster, wodurch die Positionierung mittels des Strahlfängers ebenfalls nicht mehr möglich ist. Durch eine modifizierte, aber offensichtlich funktionsfähige Anzeige wird der Nutzer über die aktive Unterbindung der Nutzung auf Grund der Möglichkeit eines zu grossen Messfehlers informiert.

Vorteilhaft wird zur Unterbindung der zweckentsprechenden Nutzung die Anzeige deaktiviert, wodurch die Positionierung mittels aktiver Mittel des Strahlfängers definitiv nicht mehr möglich ist.

Die Erfindung wird bezüglich eines vorteilhaften Ausführungsbeispiels näher erläutert mit einer Darstellung eines Strahlfängers.

Nach der Darstellung ist innerhalb eines gepulsten, in einem Winkelsektor ϕ fächerförmig aufgesplitteten Laserstrahls 1 eines Linienlasersenders 2 ein handhabbarer aktiver Strahlfänger 3 derart angeordnet, dass der Laserstrahl 1 quer über den Strahlfänger 3 verläuft. Dabei nimmt im beleuchteten Winkelsektor ϕ die Linienenergiedichte ρ mit der Entfernung X vom Linienlasersender 2 ab und ist bezüglich des Sektorzentrums 4 GAUSSförmig verteilt. Der aktive Strahlfänger 3 weist in einem handhabbaren Gehäuse 5 einen Photodetektor 6 mit fünf längs einer Linie zu einem Referenzpunkt 7 definiert versetzten Photodioden 8 in Form eines Photodiodenarrays, eine Versetzungsanzeige 9, eine numerische Fehleranzeige 10 und eine Auswerteeinheit 11 auf, die mit den Photodioden 8, der Versetzungsanzeige 9 und der Fehleranzeige 10 elektronisch verbunden ist. Die mit einem steuernden Algorithmus als Mikrocontroller µC ausgeführte Auswerteeinheit 11 selbst weist in einem programmierbaren Speicherbereich 12 einen den Linienlasersender 2 charakterisierenden Parametersatz P, ein Massbestimmungsmodul 13, ein Fehlerschätzmodul 14, ein Entscheidungsmodul 15, und ein Steuermodul 16 auf. Im Massbestimmungsmodul 13 wird zur Bestimmung der Linienenergiedichte ρ die detektierte Lichtenergie Eᵢ aller i = 1 .. 5 Photodioden 8 um die Grundrauschenergie R vermindert. Im Fehlerschätzmodul 14 wird abhängig von der Linienenergiedichte ρ und dem Parametersatz P mit der Schätzfunktion f ein Fehlerschätzwert F bestimmt. Im Entscheidungsmodul 15 wird der Fehlerschätzwert F mit einem Grenzfehlerwert G verglichen und bei Überschreitung ein logisches Fehlersignal Θ bereitgestellt. Im dargestellten Zustand mit möglicherweise zu grossem Gesamtfehler bei aktiviertem Fehlersignal Θ blinken gesteuert durch das Steuermodul 16 alle Leuchtsegmente der Versetzungsanzeige 9 und Fehleranzeige 10, wodurch vom Nutzer keine Versetzungsposition ablesbar und somit ein zweckentsprechendes Positionieren unterbunden wird. Zudem wird der Nutzer durch die als Signalmittel wirkenden blinkenden Leuchtsegmente der Versetzungsanzeige 9 und der Fehleranzeige 10 über die Möglichkeit eines zu grossen Gesamtfehlers informiert. Im nicht dargestellten Nutzzustand bei deaktiviertem Fehlersignal Θ wird gesteuert durch das Steuermodul 16 die Ablage des Laserstrahls 1 von der Referenzmarke 7 durch genau ein leuchtendes Leuchtsegment qualitativ angezeigt sowie der zugeordnete im Fehlerschätzmodul 14 bestimmte Fehlerschätzwert F in der Fehleranzeige 10 numerisch angezeigt.

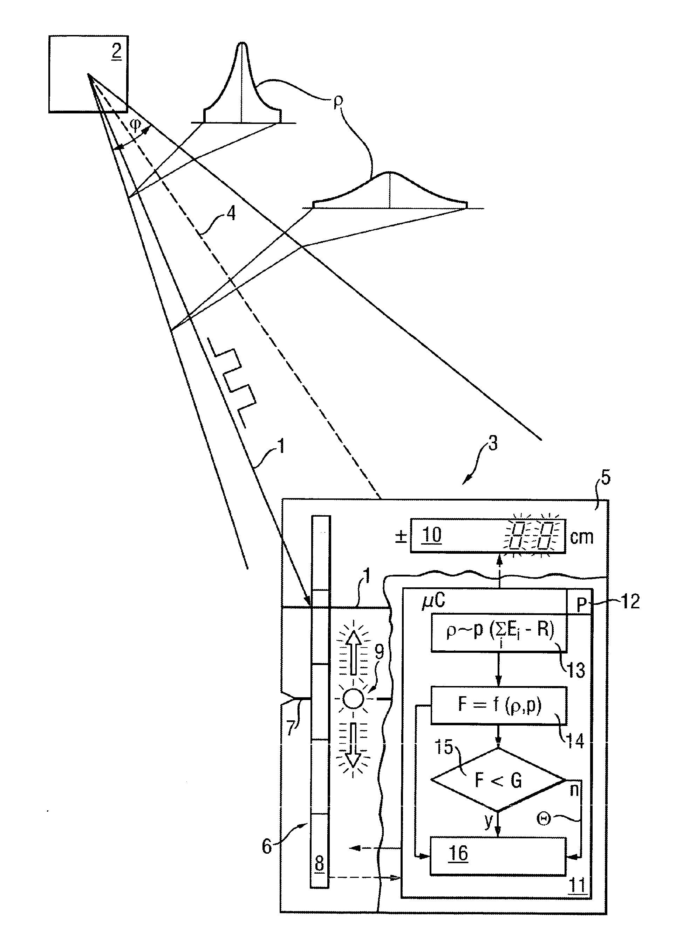

## Patentansprüche

1. Strahlfänger für einen Lichtstrahl (1) mit einem Photodetektor (6) mit mehreren, längs einer Linie zu einem Referenzpunkt (7) definiert versetzten Photodioden (8), einer Auswerteeinheit (11) und mit einer Versetzungsanzeige (9) zur Anzeige der Versetzung des Lichtstrahls (1) zum Referenzpunkt (7), **dadurch gekennzeichnet, dass** die Auswerteeinheit (11) einen Parametersatz (P) zumindest eines zuordenbaren Linienlasersenders (2), ein Massbestimmungsmodul (13) zur Bestimmung eines der detektierten Lichtenergie (E) des Lichtstrahls (1) zugeordneten Energiemasses und ein Fehlerschätzmodul (14) zur Abschätzung eines vom Energiemass abhängigen Fehlerschätzwertes (F) aufweist.

2. Strahlfänger nach Anspruch 1, **dadurch gekennzeichnet, dass** vom Massbestimmungsmodul (13) die detektierte Lichtenergie (E) um eine Grundrauschenergie (R) verminderbar ist.

3. Strahlfänger nach Anspruch 1 oder 2, **dadurch gekennzeichnet, dass** der Parametersatz (P) in einem programmierbaren Speicherbereich (12) abgelegt ist.

4. Strahlfänger nach einem der Ansprüche 1 bis 3, **dadurch gekennzeichnet, dass** die Auswerteeinheit (11) mit einer Fehleranzeige (10) zur numerischen Anzeige des Fehlerschätzwertes verbunden ist.

5. Strahlfänger nach einem der Ansprüche 1 bis 4, **dadurch gekennzeichnet, dass** die Auswerteeinheit (11) einen Vergleich des Fehlerschätzwertes (F) mit einem Grenzfehlerwert (G) beinhaltet, welches ein Fehlersignal (Θ) ausgibt.

6. Strahlfänger nach Anspruch 5, **dadurch gekennzeichnet, dass** der Auswerteeinheit (11) ein vom Fehlersignal (Θ) abhängiges Steuermodul (16) zur Signalisierung des Fehlersignals (Θ) zugeordnet ist.

7. Strahlfänger nach Anspruch 5 oder 6, **dadurch gekennzeichnet, dass** der Auswerteeinheit (11) ein vom Fehlersignal (Θ) abhängiges Steuermodul (16) zur aktiven Unterbindung der zweckentsprechenden Nutzung zugeordnet ist.

8. Strahlfänger nach Anspruch 7, **dadurch gekennzeichnet, dass** die Anzeige der Versetzungsposition durch das Steuermodul (16) zweckentfremdend modifizierbar ist.

9. Strahlfänger nach Anspruch 7 oder 8, **dadurch gekennzeichnet, dass** die Anzeige der Versetzungsposition über das Steuermodul (16) deaktivierbar ist.

## Claims

1. Beam detector for a light beam (1) with a photo detector (6) with several photodiodes (8) displaced along a line defined in relation to a reference point (7), an evaluation unit (11) and a displacement indicator (9) to indicate the displacement of the light beam (1) in relation to a reference point (7), **characterised in that** the evaluation unit (11) has a set of parameters (P) of at least one linear laser transmitter (2), which may be assigned, a module for determining mass (13) to determine a mass of energy assigned to the light energy (E) of the light beam (1) detected and a module for estimating error (14) to assess a value for estimating error (F) depending on the mass of energy.

2. Beam detector according to claim 1, **characterised in that** the light energy (E) detected by the module for determining mass (13) may be reduced by background noise energy (R).

3. Beam detector according to claim 1 or 2, **characterised in that** the set of parameters (P) is stored in a storage area (12), which may be programmed.

4. Beam detector according to one of claims 1 to 3, **characterised in that** the evaluation unit (11) is connected to an error indicator (10) for numerical indication of the value for estimating error.

5. Beam detector according to one of claims 1 to 4, **characterised in that** the evaluation unit (11) contains a comparison of the value for estimating error (F) with a value for critical error (G), which emits an error signal (Θ).

6. Beam detector according to claim 5, **characterised in that** a control module (16) depending on the error signal (Θ) is assigned to the evaluation unit (11) for signalling the error signal (Θ).

7. Beam detector according to claim 5 or 6, **characterised in that** a control module (16) depending on an error signal (Θ) is assigned to the evaluation unit (11) for active stoppage of use for its intended purpose.

8. Beam detector according to claim 7, **characterised in that** the indicator of the displacement position may be modified by the control module (16) for purposes other than intended.

9. Beam detector according to claim 7 or 8, **characterised in that** the indicator of the displacement position may be deactivated by the control module (16).

## Revendications

1. Piège à faisceau pour un faisceau lumineux (1), comportant un photodétecteur (6) muni de plusieurs photodiodes (8) décalées le long d'une ligne de manière définie par rapport à un point de référence (7), une unité d'évaluation (11) et un affichage de décalage (9) pour afficher le décalage du faisceau lumineux (1) par rapport au point de référence (7), **caractérisé en ce que** l'unité d'évaluation (11) comporte un jeu de paramètres (P) d'au moins un émetteur laser linéaire pouvant être associé (2), un module de détermination de quantité (13) pour déterminer une quantité d'énergie associée à l'énergie lumineuse détectée (E) du faisceau lumineux (1), et un module d'estimation d'erreur (14) pour estimer une valeur d'estimation d'erreur (F) en fonction de la quantité d'énergie.

2. Piège à faisceau selon la revendication 1, **caractérisé en ce que** l'énergie lumineuse détectée (E) peut être réduite par le module de détermination de quantité (13) d'une valeur égale à une énergie de bruit de fond (R).

3. Piège à faisceau selon la revendication 1 ou 2, **caractérisé en ce que** le jeu de paramètres (P) est stocké dans une zone de mémoire programmable (12).

4. Piège à faisceau selon l'une quelconque des revendications 1 à 3, **caractérisé en ce que** l'unité d'évaluation (11) est reliée à un affichage d'erreur (10) pour afficher numériquement la valeur d'estimation d'erreur.

5. Piège à faisceau selon l'une quelconque des revendications 1 à 4, **caractérisé en ce que** l'unité d'évaluation (11) établit une comparaison de la valeur d'estimation d'erreur (F) avec une valeur d'erreur de seuil (G), laquelle comparaison génère un signal d'erreur (Θ).

6. Piège à faisceau selon la revendication 5, **caractérisé en ce que** l'unité d'évaluation (11) est associée à un module de commande (16) dépendant du signal d'erreur (Θ) pour signaler le signal d'erreur.

7. Piège à faisceau selon la revendication 5 ou 6, **caractérisé en ce que** l'unité d'évaluation (11) est associée à un module de commande (16) dépendant du signal d'erreur (Θ) pour empêcher activement l'utilisation de manière appropriée.

8. Piège à faisceau selon la revendication 7, **caractérisé en ce que** l'affichage de la position décalée peut être modifié de manière inappropriée par le module de commande (16).

9. Piège à faisceau selon la revendication 7 ou 8, **caractérisé en ce que** l'affichage de la position décalée peut être désactivé par le module de commande (16).
